# EUROPÄISCHE PATENTSCHRIFT

(11) **EP 4 148 869 B1**
(45) Veröffentlichungstag und Bekanntmachung des Hinweises auf die Patenterteilung: **14.02.2024**
(21) Anmeldenummer: 22188686.4
(22) Anmeldetag: 04.08.2022
(51) Int. Cl.: H01M 10/613, H01M 10/6556, H01M 10/6567, H01M 10/667

(54) **KÜHLVORRICHTUNG ZUR KÜHLUNG EINER LEISTUNGSELEKTRONIK EINES BATTERIESYSTEMS UND BATTERIESYSTEM**
COOLING DEVICE FOR COOLING POWER ELECTRONICS OF BATTERY SYSTEM AND BATTERY SYSTEM
DISPOSITIF DE REFROIDISSEMENT DESTINÉ AU REFROIDISSEMENT DE L'ÉLECTRONIQUE DE PUISSANCE D'UN SYSTÈME DE BATTERIE ET?SYSTÈME DE BATTERIE

(30) Priorität: 25.08.2021 DE 102021209308
(43) Veröffentlichungstag der Anmeldung: 15.03.2023
(73) Patentinhaber: Robert Bosch GmbH, 70442 Stuttgart (DE)
(72) Erfinder: Schmitt, Markus, 71732 Tamm (DE)

(56) Entgegenhaltungen:
- EP-A1- 2 806 494
- EP-A1- 3 796 415
- DE-A1- 2 657 183
- DE-A1-102016 125 859

## Beschreibung

### Stand der Technik

Die vorliegende Erfindung betrifft eine Kühlvorrichtung zur Kühlung einer Leistungselektronik eines Batteriesystems, insbesondere für ein Kraftfahrzeug. Ferner betrifft die Erfindung ein Batteriesystem mit einem Batteriezellenstapel mit einer Vielzahl an Batteriezellen, einer Leistungselektronik sowie einer Kühlvorrichtung.

Im bekannten Stand der Technik, wie z.B. EP 2796415, werden einzelne Batteriezellen zu Batteriemodulen zusammengeschaltet. Batteriemodule werden zu Batterien bzw. Batteriesystemen zusammengeschaltet. Aufgrund der Vielzahl an verschiedenen Fahrzeugbauräumen, sind variable Modulgrößen erforderlich, um den vorhandenen Bauraum optimal auszunutzen. Li-lonen-, bzw. Li-Polymer-Batteriezellen erwärmen sich bedingt durch chemische Wandlungsprozesse vor allem bei der schnellen Energieabgabe bzw. -aufnahme. Je leistungsfähiger das Batteriepack ist, desto größer ist seine Erwärmung und damit einhergehend ein effizientes aktives Thermomanagementsystem. Dadurch lassen sich die Batteriezellen und/oder die Leistungselektronik des Batteriesystems kühlen und heizen. Wobei die Batteriezellen überwiegend gekühlt werden müssen.

Die optimale Betriebstemperatur von Li-Ionen-Batteriesystemen beträgt ca. +5 °C bis +35 °C. Ab einer Betriebstemperatur von ca. +40 °C wird ihre Lebensdauer geringer. Um die Lebensdaueranforderung von ca. 8-10 Jahren zu erreichen, ist deshalb eine hinreichende thermische Konditionierung der Batterie erforderlich. Die Batteriezellen und/oder die Leistungselektronik des Batteriesystems sollten unter allen Betriebszuständen in einem thermisch unkritischen Zustand gehalten werden. Um einem Alterungsgleichlaufs der Batteriezellen zu erreichen, darf der Temperaturgradient von Batteriezelle zu Batteriezelle und/oder innerhalber der Leistungselektronik des Batteriesystems nur gering sein.

Die Heizung und Entwärmung des Batteriesystems geschieht heute überwiegend durch eine Flüssigkeitstemperierung mit einem Wasser/Glykol-Gemisch. Dieses wird durch Kanäle der unterhalb der Batteriemodule und/oder der Leistungselektronik des Batteriesystems angeordneten Kühlplatten geleitet. Die Versorgung der Kühlplatten wird mit einer Kühlwasserversorgung mit entsprechenden weiteren Komponenten im Kühlkreislauf realisiert.

Nachteilig ist den bekannten Kühlkreisläufen zur Kühlung einer Leistungselektronik eines Batteriesystems, dass diese keine vorteilhafte Lösung zur Entlüftung ermöglichen.

### Offenbarung der Erfindung

Die Erfindung beansprucht eine Kühlvorrichtung zur Kühlung einer Leistungselektronik eines Batteriesystems mit den Merkmalen des unabhängigen Anspruchs 1. Ferner beansprucht die Erfindung ein Batteriesystem, umfassend einen Batteriezellenstapel mit einer Vielzahl an Batteriezellen, eine Leistungselektronik sowie eine Kühlvorrichtung mit den Merkmalen des unabhängigen Anspruchs 9. Weitere Vorteile und Details der Erfindung ergeben sich aus den Unteransprüchen, der Beschreibung und den Zeichnungen. Dabei gelten Merkmale, die im Zusammenhang mit der erfindungsgemäßen Kühlvorrichtung beschrieben sind, selbstverständlich auch im Zusammenhang mit dem erfindungsgemäßen Batteriesystem und jeweils umgekehrt, sodass bezüglich der Offenbarung zu den einzelnen Erfindungsaspekten stets wechselseitig Bezug genommen wird beziehungsweise werden kann.

Gemäß einem ersten Aspekt offenbart die Erfindung eine Kühlvorrichtung zur Kühlung einer Leistungselektronik eines Batteriezellenstapels mit einer Vielzahl an Batteriezellen. Die Kühlvorrichtung weist einen Kühlkanal mit einem Kühlkanalboden, mit einer Kühlkanaldecke und mit wenigstens einer Kühlkanalwand auf, wobei die Leistungselektronik auf einer dem Kühlkanal abgewandten Seite der Kühlkanaldecke mit der Kühlkanaldecke wärmeübertragend verbindbar ist. Die Kühlvorrichtung weist einen Einlassanschluss zur Einströmung von einer Kühlflüssigkeit in den Kühlkanal und einen Auslassanschluss zur Ausströmung von der Kühlflüssigkeit aus dem Kühlkanal auf. Die Kühlvorrichtung ist dadurch gekennzeichnet, dass die Kühlkanaldecke auf der dem Kühlkanal zugewandten Seite eine Grundfläche und wenigstens eine Erhebung aufweist, wobei die Erhebung einen Entlüftungsraum ausbildet und wobei die Kühlvorrichtung eine Entlüftungsschnittstelle zur Entlüftung des Entlüftungsraums aufweist.

Im Rahmen der Erfindung ist ein Koordinatensystem, die Positions- und Richtungsangaben derart definiert, dass eine Kühlkanaldecke die obere Begrenzung des erfindungsgemäßen Kühlkanals darstellt. Der Kühlkanalboden stellt folglich die untere Begrenzung des erfindungsgemäßen Kühlkanals und die wenigstens eine Kühlkanalwand stellt die seitlichen und/oder vertikalen Begrenzungen des erfindungsgemäßen Kühlkanals dar. Die Leistungselektronik ist somit in einem eingebauten Zustand bevorzugt oberhalb der Kühlkanaldecke angeordnet. Der Batteriezellenstapel ist bevorzugt unterhalb einer Baugruppe aus Leistungselektronik und Kühlvorrichtung angeordnet. Natürlich ist diese Anordnung auch um wenigstens eine Raumachse gedreht einbaubar, sodass die Positions- und Richtungsangaben als relative Angaben zu den beanspruchten Merkmalen zu verstehen sind.

Die Kühlkanaldecke ist bevorzugt flächig oder im Wesentlichen flächig ausgestaltet. Die Kühlkanaldecke umfasst eine dem Kühlkanal zugewandten Seite und eine gegenüberliegende dem Kühlkanal abgewandte Seite. Die Leistungselektronik ist auf der dem Kühlkanal abgewandten Seite mit der Kühlkanaldecke wärmeübertragend verbindbar. Die Leistungselektronik weist, wie später ausführlicher beschrieben, wenigstens eine Logikvorrichtung und wenigstens eine Leistungsvorrichtung auf. Vorzugsweise ist die Leistungselektronik als eine Platine ausgestaltet. Die Leistungselektronik ist dabei beispielhaft in zwei Abschnitte aufgeteilt; einen Abschnitt für die Logikvorrichtung und einen Abschnitt für die Leistungsvorrichtung. Die Logikvorrichtung und die Leistungsvorrichtung sind bevorzugt als Baugruppen aus einer Vielzahl an Bauteilen zu verstehen, mit denen die Leistungselektronik bestückt ist. Insbesondere aus Bauraumgründen ist die Leistungselektronik im Bereich des Abschnitts der Logikvorrichtung beidseitig bestückt, wohingegen die Leistungsvorrichtung lediglich einseitig bestückt ist. Die Logikvorrichtung weist einen geringeren Kühlbedarf aufgrund von geringerer Wärmeproduktion auf. Die wärmeübertragende Verbindung zwischen der Leistungselektronik und der Kühlvorrichtung wird bevorzugt im Abschnitt der Leistungsvorrichtung, insbesondere an der nicht bestückten Unterseite der Leistungselektronik im Abschnitt der Leistungsvorrichtung ermöglicht. Um einen möglichst geringen Bauraum, geringe Wandstärken und eine vorteilhafte wärmeübertragende Kontaktierung zwischen der Kühlvorrichtung, insbesondere der Kühlkanaldecke, und der Leistungselektronik zu ermöglichen, weist die Kühlkanaldecke eine Grundfläche und wenigstens eine Erhebung auf. Die Erhebung ist erfindungsgemäß als eine Erhebung der Kühlkanaldecke nach oben, in Richtung der Leistungselektronik, zu verstehen. Bevorzugt weist die Kühlkanaldecke eine gleiche oder im Wesentlichen gleiche Materialdicke auf, sodass durch die Erhebung der Kühlkanaldecke eine Vertiefung auf der dem Kühlkanal abgewandten Seite der Kühlkanaldecke im Bereich der Grundfläche eine Vertiefung ausgebildet wird. Die Formulierung "X oder im Wesentlichen X" soll im Rahmen der Erfindung als mögliche, geringe Abweichung, beispielsweise aufgrund von Fertigungstoleranzen, Material- und/oder Prozesseigenschaften verstanden werden, ohne die zugrundeliegende, beabsichtigte Funktion des Merkmals zu verändern. Anschaulich beschrieben weist die Kühlkanaldecke somit auf der Unterseite wenigstens eine Erhebung und daraus resultierend auf der Oberseite wenigstens eine Vertiefung auf. Die Vertiefung der Oberseite dient bevorzugt der vorteilhaften Ausnutzung vom Bauraum für die Leistungselektronik, insbesondere der zuvor beschriebenen beidseitigen Bestückung der Leistungselektronik im Abschnitt der Logikvorrichtung. Der Entlüftungsraum wird folglich durch die Erhebung ausgebildet und/oder stellt anschaulich beschrieben die Volumendifferenz zu einer hypothetisch anstelle der Erhebung eben ausgestalteten Kühlkanaldecke dar.

Durch den Höhenunterschied zwischen der Grundfläche und der Erhebung in dem Kühlkanal, insbesondere durch den Entlüftungsraum, ergibt sich der Bedarf einer Möglichkeit zur Entlüftung, da ein nicht entlüfteter Kühlkanal, insbesondere eine Luftblase innerhalb des Kühlkanals, die Kühlleistung der Kühlvorrichtung nachteilig beeinflusst. Insbesondere bei einer Erstbefüllung der Kühlvorrichtung mit Kühlflüssigkeit wird bevorzugt mit Unterdruck befüllt, sodass nahezu keine Luft mehr in der Kühlvorrichtung vorhanden ist. Ein Luftpolster in dem Kühlkanal führt dazu, dass die Elektronikbausteine auf der Platine der Leistungselektronik in dem Bereich des Luftpolsters nicht mehr ausreichend gekühlt werden können und/oder dauerhaft beschädigt werden. Da der Höhenunterschied der Grundfläche und der Erhebung relativ groß sein kann, findet selbst im Betrieb des Kühlmittelkreislaufes zumeist keine Entlüftung statt. Es verbleibt dauerhaft ein Luftpolster in der Kühlvorrichtung. Eine erfindungsgemäße Kühlvorrichtung mit einer Entlüftungsschnittstelle ermöglicht eine vollständige oder im Wesentlichen vollständige Entlüftung, insbesondere bei einer erneuten Befüllung im Betrieb des Batteriesystems und/oder Kraftfahrzeuges, sowie auch eine Befüllung ohne Unterdruck. Die erfindungsgemäße Entlüftungsschnittstelle ist bevorzugt als eine Öffnung, insbesondere eine öffnungsbare und verschließbare Öffnung, des Kühlkanals, insbesondere in der und/oder durch die Kühlkanalwand zu verstehen. Die Entlüftungsschnittstelle ist bevorzugt derart angeordnet, dass eine vollständige oder im Wesentlichen vollständige Entlüftung der Kühlvorrichtung, insbesondere des Entlüftungsraums, ermöglicht wird.

Bevorzugt weist die Kühlkanaldecke auf einer dem Kühlkanal abgewandten Seite eine Vielzahl an, insbesondere parallelen, Wärmeübertragungsflächen auf, um eine möglichst vorteilhafte Wärmeübertragung von der Leistungselektronik zu ermöglichen.

Eine derart ausgestaltete Kühlvorrichtung ist besonders vorteilhaft, da eine Kühlung der Leistungselektronik bereitgestellt wird, wobei eine Entlüftung des Kühlkanals, insbesondere des Entlüftungsraums, mit besonders einfachen und kostengünstigen Mitteln ermöglicht wird.

Gemäß einer bevorzugten Weiterentwicklung der Erfindung kann bei einer Kühlvorrichtung vorgesehen sein, dass die Kühlkanaldecke zwei Ebenen aufweist, wobei die zweite Ebene oberhalb der ersten Ebene angeordnet ist, wobei die Grundfläche in der ersten Ebene angeordnet ist und wobei sich der Entlüftungsraum zwischen der ersten Ebene und der zweiten Ebene erstreckt, insbesondere wobei die erste Ebene und die zweite Ebene parallel zueinander ausgestaltet sind. Bevorzugt ist somit die Entlüftungsschnittstelle zwischen der ersten Ebene und der zweiten Ebene angeordnet. Die Erstreckung der Kühlkanaldecke ist vorzugsweise zumindest abschnittsweise in und/oder entlang den Ebenen, wobei sich die Grundfläche bevorzugt in und/oder entlang der ersten Ebene erstreckt und sich die Erhebung bevorzugt in und/oder entlang der zweiten Ebene erstreckt. Somit ist ein Entlüftungsraum bevorzugt zwischen der ersten und der zweiten Ebene oder im Wesentlichen zwischen der ersten und der zweiten Ebene ausgebildet. Die Ebenen sind im Rahmen der Erfindung bevorzugt als theoretische Ebenen zu verstehen, in und/oder entlang derer sich die Kühlkanaldecke erstreckt.

Gemäß einer bevorzugten Weiterentwicklung der Erfindung kann bei einer Kühlvorrichtung vorgesehen sein, dass der Entlüftungsraum, insbesondere eine Oberseite des Entlüftungsraums, entlang eines Strömungspfads der Kühlflüssigkeit zumindest abschnittsweise, insbesondere bis zu der Entlüftungsschnittstelle, ansteigt. Ein Ansteigen des Entlüftungsraums, insbesondere der Oberseite des Entlüftungsraums ist im Rahmen der Erfindung derart zu verstehen, dass in einem eingebauten Zustand der Kühlvorrichtung der Entlüftungsraum, insbesondere die Oberseite des Entlüftungsraums, zumindest abschnittsweise aufsteigend geneigt ausgestaltet ist und somit an Höhe in Bezug auf eine Höhenraumachse zunimmt. Eine derart ausgestaltete Kühlvorrichtung ist besonders vorteilhaft, da sich somit eine Luftblase innerhalb des Kühlkanals entlang der Oberseite des Entlüftungsraums zu einem höchsten Punkt, insbesondere bis zu der Entlüftungsschnittstelle, bewegt und die Kühlvorrichtung vorteilhaft entlüftet werden kann.

Gemäß einer bevorzugten Weiterentwicklung der Erfindung kann bei einer Kühlvorrichtung vorgesehen sein, dass der Entlüftungsraum entlang des Strömungspfads der Kühlflüssigkeit einen Anfangsabschnitt und einen Endabschnitt aufweist, wobei die Entlüftungsschnittstelle in dem Endabschnitt des Entlüftungsraums angeordnet ist. Eingeschlossene Luft im Kühlkanal sammelt und/oder bewegt sich zumeist entlang des Strömungspfads des Kühlmittels. Um den Kühlkanal vollständig oder im Wesentlichen vollständig entlüften zu können, ist die Anordnung der Entlüftungsschnittstelle in dem Endabschnitt des Entlüftungsraums somit besonders vorteilhaft.

Gemäß einer bevorzugten Weiterentwicklung der Erfindung kann bei einer Kühlvorrichtung vorgesehen sein, dass die Entlüftungsschnittstelle einen kleineren Durchmesser zur Entlüftung als einen Durchmesser des Einlassanschlusses für die Kühlflüssigkeit und/oder einen Durchmesser des Auslassanschlusses für die Kühlflüssigkeit aufweist und/oder dass der Einlassanschluss und/oder der Auslassanschluss unterhalb der Grundfläche angeordnet sind. Zumeist werden nur kleine Mengen an Luft aus der Kühlvorrichtung entlüftet. Eine Entlüftungsschnittstelle mit einem kleineren Durchmesser zur Entlüftung ermöglicht vorteilhaft eine Entlüftung und erleichtert es, dass keine größeren Mengen an Kühlflüssigkeit bei der Entlüftung austreten. Eine Anordnung des Einlassanschlusses und/oder des Auslassanschlusses unterhalb der Grundfläche ist bauraumtechnisch vorteilhaft.

Gemäß einer bevorzugten Weiterentwicklung der Erfindung kann bei einer Kühlvorrichtung vorgesehen sein, dass der Strömungskanal eine Vielzahl an Strömungsstörvorrichtungen umfasst, insbesondere wobei die Strömungsstörvorrichtungen mit der Kühlkanaldecke verbunden sind und sich in Richtung Kühlkanalboden erstrecken. Die Vielzahl an Strömungsstörvorrichtungen ermöglichen eine Steigerung der Kühlleistung durch beispielsweise Verwirbelungen der Strömung der Kühlflüssigkeit innerhalb des Kühlkanals und/oder durch eine Vergrößerung der Oberfläche zur Wärmeübertragung zwischen der Kühlvorrichtung und der Kühlflüssigkeit. Die Vielzahl an Strömungsstörvorrichtungen können als Pins, Säulen, Zylinder, Kegel und/oder anderweitige Strömungsstörvorrichtungen ausgestaltet sein. Die Strömungsstörvorrichtungen sind bevorzugt stoffschlüssig, insbesondere einstückig, mit der Kühlkanaldecke ausgestaltet.

Gemäß einer bevorzugten Weiterentwicklung der Erfindung kann bei einer Kühlvorrichtung vorgesehen sein, dass der Entlüftungsraum zumindest abschnittsweise U-förmig um die Grundfläche herum angeordnet ist. Bevorzugt ist die Leistungselektronik derart ausgestaltet, dass in einem mittleren Abschnitt an einer Seite der beispielsweise als Platine ausgestalteten Leistungselektronik die Logikvorrichtung in Form von Bauteilen angeordnet sind. Die Leistungsvorrichtung ist bevorzugt U-förmig auf der Leistungselektronik und um die Logikvorrichtung angeordnet. Derart ausgestaltet, wird durch die Leistungselektronik ein vorteilhaft langer U-förmiger Kühlkanal entlang der Leistungsvorrichtung ermöglicht, sodass eine große Fläche zur Übertragung der Wärme der Leistungsvorrichtung an die Kühlvorrichtung vorhanden ist. Eine derart ausgestaltete Kühlvorrichtung ermöglicht eine besonders vorteilhafte Kühlung und gleichzeitig eine hohe Bauraumeffizienz sowie geringe Abstände zwischen den Bauteilen der Logikvorrichtung und der Leistungsvorrichtung.

Gemäß einer bevorzugten Weiterentwicklung der Erfindung kann bei einer Kühlvorrichtung vorgesehen sein, dass die Kühlvorrichtung einen Grundkörper, insbesondere ein Gehäuse, aufweist, wobei der Kühlkanal stoffschlüssig in dem Grundkörper ausgestaltet ist und/oder wobei der Grundkörper zur Aufnahme der Leistungselektronik und/oder des Batteriezellenstapels ausgestaltet ist. Ein erfindungsgemäßer Grundkörper, insbesondere ein Gehäuse, ermöglicht vorteilhaft eine Positionssicherung, eine Anordnung, eine Abdichtung und/oder einen Schutz gegen Schmutz und andere Umwelteinflüsse für die Kühlvorrichtung, die Leistungselektronik und/oder den Batteriezellenstapel. Der Grundkörper ist bevorzugt als Druckgussgehäuse ausgestaltet und/oder umfasst vorteilhaft Befestigungsvorrichtungen zur Befestigung in einem Kraftfahrzeug.

Gemäß einem zweiten Aspekt offenbart die Erfindung ein Batteriesystem, umfassend einen Batteriezellenstapel mit einer Vielzahl an Batteriezellen, eine Leistungselektronik sowie eine Kühlvorrichtung. Die Leistungselektronik ist auf der dem Kühlkanal abgewandten Seite der Kühlkanaldecke mit der Kühlkanaldecke wärmeübertragend verbunden. Die Kühlvorrichtung ist gemäß dem ersten Aspekt ausgestaltet. Bei dem beschriebenen Batteriesystem ergeben sich sämtliche Vorteile, die bereits zu der Kühlvorrichtung gemäß dem ersten Aspekt der Erfindung beschrieben worden sind. Ein erfindungsgemäßes Batteriesystem ist besonders vorteilhaft, da eine Kühlung der Leistungselektronik und eine Entlüftung der Kühlvorrichtung mit besonders einfachen und kostengünstigen Mitteln ermöglicht wird.

Gemäß einer bevorzugten Weiterentwicklung der Erfindung kann bei einem Batteriesystem vorgesehen sein, dass die Leistungselektronik eine Logikvorrichtung und eine Leistungsvorrichtung umfasst, insbesondere wobei die Logikvorrichtung auf der dem Kühlkanal abgewandten Seite der Grundfläche der Kühlkanaldecke angeordnet ist und wobei die Leistungsvorrichtung auf der dem Kühlkanal abgewandten Seite des Entlüftungsraums der Kühlkanaldecke angeordnet ist. Ein derart ausgestaltetes Batteriesystem ermöglicht besonders vorteilhaft und bauraumsparend eine Kühlung der Leistungselektronik sowie eine Entlüftung der Kühlvorrichtung. Die Leistungselektronik ist bevorzugt, wie zuvor beschrieben, als Platine mit Logikabschnitt und Leistungsabschnitt ausgestaltet, wobei der Logikabschnitt bevorzugt beidseitig auf der Platine mit Bauteilen bestückt ist. Die wärmeleitende Verbindung der Leistungselektronik mit der Kühlvorrichtung ist bevorzugt im Leistungsabschnitt ermöglicht, da dieser den größten Kühlbedarf aufweist.

Eine erfindungsgemäße Kühlvorrichtung sowie ein Batteriesystem werden nachfolgend anhand von Zeichnungen näher erläutert. Es zeigen jeweils schematisch:
- Figur 1: in einer geschnittenen Seitenansicht ein Batteriesystem mit einem Batteriezellenstapel mit einer Vielzahl an Batteriezellen, einer Leistungselektronik sowie einer Kühlvorrichtung,
- Figur 2: in einer perspektivischen Ansicht von unten eine Kühlvorrichtung, und
- Figur 3: in einer geschnittenen perspektivischen Ansicht von der Seite eine weitere Kühlvorrichtung.

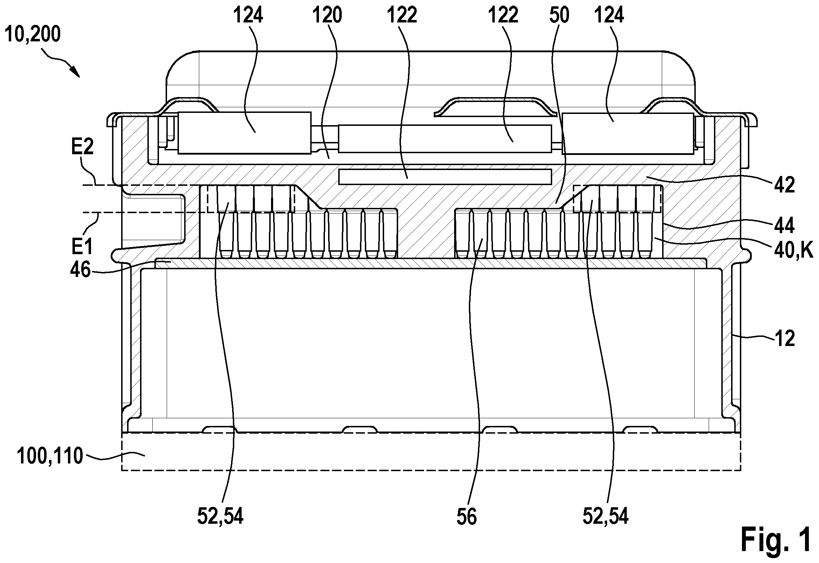

Elemente mit gleicher Funktion und Wirkungsweise sind in den Fig. 1 bis 3 jeweils mit denselben Bezugszeichen versehen.

In Fig. 1 ist schematisch in einer geschnittenen Seitenansicht ein Batteriesystem 200 mit einem Batteriezellenstapel 100 mit einer Vielzahl an Batteriezellen 110, einer Leistungselektronik 120 sowie einer Kühlvorrichtung 10 gezeigt. Die Kühlvorrichtung 10 zur Kühlung der Leistungselektronik 120 des Batteriezellenstapels 100 mit einer Vielzahl an Batteriezellen 110 weist einen Kühlkanal 40 mit einem Kühlkanalboden 46, mit einer Kühlkanaldecke 42 und mit wenigstens einer Kühlkanalwand 44 auf. Die Leistungselektronik 120 ist auf einer dem Kühlkanal 40 abgewandten Seite der Kühlkanaldecke 42 mit der Kühlkanaldecke 42 wärmeübertragend verbunden. Die Kühlkanaldecke 42 weist auf der dem Kühlkanal 40 zugewandten Seite eine Grundfläche 50 und wenigstens eine Erhebung 52 auf, wobei die Erhebung 52 einen Entlüftungsraum 54 ausbildet. Die Kühlkanaldecke 42 weist zwei Ebenen E1, E2 auf, wobei die zweite Ebene E2 oberhalb der ersten Ebene E1 angeordnet ist, wobei die Grundfläche 50 in der ersten Ebene E1 angeordnet ist und wobei sich der Entlüftungsraum 54 zwischen der ersten Ebene E1 und der zweiten Ebene E2 erstreckt, wobei die erste Ebene E1 und die zweite Ebene E2 parallel zueinander ausgestaltet sind. Der Strömungskanal 40 umfasst eine Vielzahl an Strömungsstörvorrichtungen 56, wobei die Strömungsstörvorrichtungen 56 mit der Kühlkanaldecke 42 verbunden sind und sich in Richtung Kühlkanalboden 46 erstrecken. Die Kühlvorrichtung 10 weist einen Grundkörper 12 in Form eines Gehäuses auf, wobei der Kühlkanal 40 stoffschlüssig in dem Grundkörper 12 ausgestaltet ist und wobei der Grundkörper 12 zur Aufnahme der Leistungselektronik 120 und des Batteriezellenstapels 100 ausgestaltet ist. Die Leistungselektronik 120 umfasst eine Logikvorrichtung 122 und eine Leistungsvorrichtung 124, wobei die Logikvorrichtung 122 auf der dem Kühlkanal 40 abgewandten Seite der Grundfläche 50 der Kühlkanaldecke 42 angeordnet ist und wobei die Leistungsvorrichtung 124 auf der dem Kühlkanal 40 abgewandten Seite des Entlüftungsraums 54 der Kühlkanaldecke 42 angeordnet ist

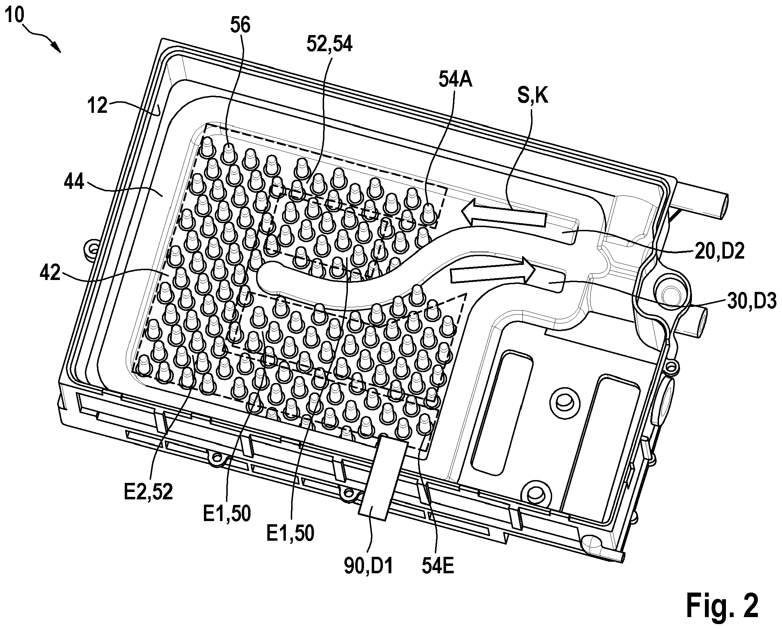

In Fig. 2 ist schematisch in einer perspektivischen Ansicht von unten eine Kühlvorrichtung 10 gezeigt. Die Kühlvorrichtung 10 weist einen Einlassanschluss 20 zur Einströmung von einer Kühlflüssigkeit K in den Kühlkanal 40, einen Auslassanschluss 30 zur Ausströmung von der Kühlflüssigkeit K aus dem Kühlkanal 40 auf. Die Kühlvorrichtung 10 weist eine Entlüftungsschnittstelle 90 zur Entlüftung des Entlüftungsraums 54 auf. Der Entlüftungsraum 54 weist entlang des Strömungspfads S der Kühlflüssigkeit K einen Anfangsabschnitt 54A und einen Endabschnitt 54E auf, wobei die Entlüftungsschnittstelle 90 in dem Endabschnitt 54E des Entlüftungsraums 54 angeordnet ist. Die Entlüftungsschnittstelle 90 weist einen kleineren Durchmesser D1 zur Entlüftung als einen Durchmesser D2 des Einlassanschlusses 20 für die Kühlflüssigkeit K und einen Durchmesser D3 des Auslassanschlusses 30 für die Kühlflüssigkeit K auf. Der Einlassanschluss 20 und der Auslassanschluss 30 sind unterhalb der Grundfläche 50, hier also aus der Bildebene heraus vor der Grundfläche 50, angeordnet. Der Entlüftungsraum 54 ist zumindest abschnittsweise U-förmig um die Grundfläche 50 herum angeordnet.

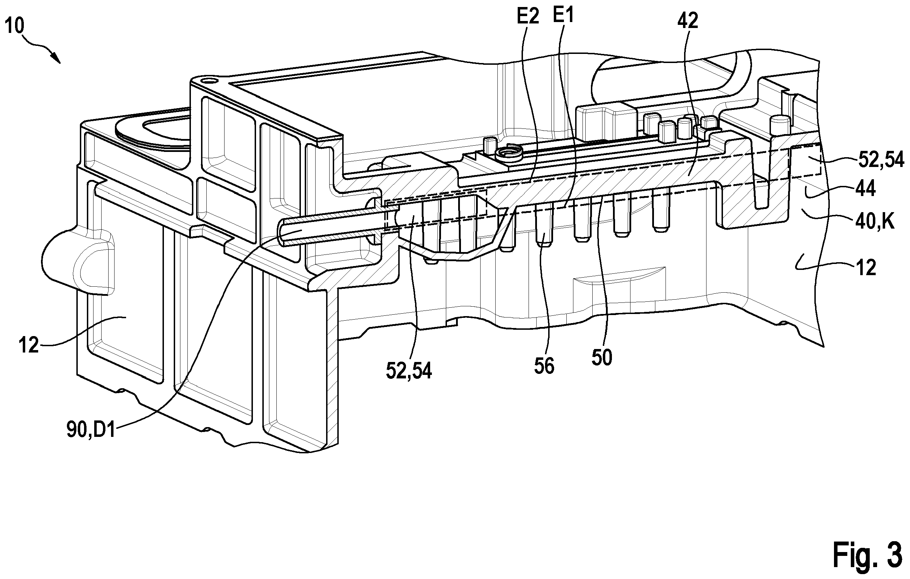

In Fig. 3 ist schematisch in einer geschnittenen perspektivischen Ansicht von der Seite eine weitere Kühlvorrichtung 10 gezeigt. Fig. 3 zeigt vorteilhaft, wie die Entlüftungsschnittstelle 90 zur Entlüftung des Entlüftungsraums 54 ausgestaltet ist und dafür zwischen der ersten Ebene E1 und der zweiten Ebene E2 angeordnet ist. Eine derart ausgestaltete Kühlvorrichtung 10 ist besonders vorteilhaft, da eine Kühlung der Leistungselektronik 120 (nicht gezeigt) bereitgestellt wird, wobei eine Entlüftung des Kühlkanals 40, insbesondere des Entlüftungsraums 54, mit besonders einfachen und kostengünstigen Mitteln ermöglicht wird.

## Patentansprüche

1. Kühlvorrichtung (10) zur Kühlung einer Leistungselektronik (120) eines Batteriesystems (200) mit einer Vielzahl an Batteriezellen (110), die Kühlvorrichtung (10) aufweisend einen Kühlkanal (40) mit einem Kühlkanalboden (46), mit einer Kühlkanaldecke (42) und mit wenigstens einer Kühlkanalwand (44), wobei die Leistungselektronik (120) auf einer dem Kühlkanal (40) abgewandten Seite der Kühlkanaldecke (42) mit der Kühlkanaldecke (42) wärmeübertragend verbindbar ist, wobei die Kühlvorrichtung (10) einen Einlassanschluss (20) zur Einströmung von einer Kühlflüssigkeit (K) in den Kühlkanal (40), einen Auslassanschluss (30) zur Ausströmung von der Kühlflüssigkeit (K) aus dem Kühlkanal (40) aufweist,
**dadurch gekennzeichnet,**
**dass** die Kühlkanaldecke (42) auf der dem Kühlkanal (40) zugewandten Seite eine Grundfläche (50) und wenigstens eine Erhebung (52) aufweist, wobei die Erhebung (52) einen Entlüftungsraum (54) ausbildet und wobei die Kühlvorrichtung (10) eine Entlüftungsschnittstelle (90) zur Entlüftung des Entlüftungsraums (54) aufweist.

2. Kühlvorrichtung (10) nach Anspruch 1,
**dadurch gekennzeichnet,**
**dass** die Kühlkanaldecke (42) zwei Ebenen (E1, E2) aufweist, wobei die zweite Ebene (E2) oberhalb der ersten Ebene (E1) angeordnet ist, wobei die Grundfläche (50) in der ersten Ebene (E1) angeordnet ist und wobei sich der Entlüftungsraum (54) zwischen der ersten Ebene (E1) und der zweiten Ebene (E2) erstreckt, insbesondere wobei die erste Ebene (E1) und die zweite Ebene (E2) parallel zueinander ausgestaltet sind.

3. Kühlvorrichtung (10) nach einem der vorangegangenen Ansprüche,
**dadurch gekennzeichnet,**
**dass** der Entlüftungsraum (54), insbesondere eine Oberseite des Entlüftungsraums (54), entlang eines Strömungspfads (S) der Kühlflüssigkeit (K) zumindest abschnittsweise, insbesondere bis zu der Entlüftungsschnittstelle (90), ansteigt.

4. Kühlvorrichtung (10) nach einem der vorangegangenen Ansprüche,
**dadurch gekennzeichnet,**
**dass** der Entlüftungsraum (54) entlang des Strömungspfad (S) der Kühlflüssigkeit (K) einen Anfangsabschnitt (54A) und einen Endabschnitt (54E) aufweist, wobei die Entlüftungsschnittstelle (90) in dem Endabschnitt (54E) des Entlüftungsraums (54) angeordnet ist.

5. Kühlvorrichtung (10) nach einem der vorangegangenen Ansprüche,
**dadurch gekennzeichnet,**
**dass** die Entlüftungsschnittstelle (90) einen kleineren Durchmesser (D1) zur Entlüftung als einen Durchmesser (D2) des Einlassanschlusses (20) für die Kühlflüssigkeit (K) und/oder einen Durchmesser (D3) des Auslassanschlusses (30) für die Kühlflüssigkeit (K) aufweist und/oder dass der Einlassanschluss (20) und/oder der Auslassanschluss (30) unterhalb der Grundfläche (50) angeordnet sind.

6. Kühlvorrichtung (10) nach einem der vorangegangenen Ansprüche,
**dadurch gekennzeichnet,**
**dass** der Strömungskanal (40) eine Vielzahl an Strömungsstörvorrichtungen (56) umfasst, insbesondere wobei die Strömungsstörvorrichtungen (56) mit der Kühlkanaldecke (42) verbunden sind und sich in Richtung Kühlkanalboden (46) erstrecken.

7. Kühlvorrichtung (10) nach einem der vorangegangenen Ansprüche,
**dadurch gekennzeichnet,**
**dass** der Entlüftungsraum (54) zumindest abschnittsweise U-förmig um die Grundfläche (50) herum angeordnet ist.

8. Kühlvorrichtung (10) nach einem der vorangegangenen Ansprüche,
**dadurch gekennzeichnet,**
**dass** die Kühlvorrichtung (10) einen Grundkörper (12), insbesondere ein Gehäuse, aufweist, wobei der Kühlkanal (40) stoffschlüssig in dem Grundkörper (12) ausgestaltet ist und/oder wobei der Grundkörper (12) zur Aufnahme der Leistungselektronik (120) und/oder des Batteriezellenstapels (100) ausgestaltet ist.

9. Batteriesystem (200), umfassend einen Batteriezellenstapel (100) mit einer Vielzahl an Batteriezellen (110), eine Leistungselektronik (120) sowie eine Kühlvorrichtung (10), wobei die Leistungselektronik (120) auf der dem Kühlkanal (40) abgewandten Seite der Kühlkanaldecke (42) mit der Kühlkanaldecke (42) wärmeübertragend verbunden ist,
**dadurch gekennzeichnet,**
**dass** die Kühlvorrichtung (10) nach einem der vorangegangenen Ansprüche ausgestaltet ist.

10. Batteriesystem (200) nach Anspruch 9,
**dadurch gekennzeichnet,**
**dass** die Leistungselektronik (120) eine Logikvorrichtung (122) und eine Leistungsvorrichtung (124) umfasst, insbesondere wobei die Logikvorrichtung (122) auf der dem Kühlkanal (40) abgewandten Seite der Grundfläche (50) der Kühlkanaldecke (42) angeordnet ist und wobei die Leistungsvorrichtung (124) auf der dem Kühlkanal (40) abgewandten Seite des Entlüftungsraums (54) der Kühlkanaldecke (42) angeordnet ist.

## Claims

1. Cooling device (10) for cooling power electronics (120) of a battery system (200) comprising a plurality of battery cells (110), the cooling device (10) having a cooling channel (40) with a cooling channel base (46), with a cooling channel top (42), and with at least one cooling channel wall (44), wherein the power electronics (120) are connectable in a heat-transferring manner to the cooling channel top (42) on a side of the cooling channel top (42) facing away from the cooling channel (40), wherein the cooling device (10) has an inlet port (20) for inflow of a cooling liquid (K) into the cooling channel (40) and an outlet port (30) for outflow of the cooling liquid (K) from the cooling channel (40),
**characterized in that**
the cooling channel top (42) has a base surface (50) and at least one elevation (52) on the side facing the cooling channel (40), wherein the elevation (52) forms a venting space (54), and wherein the cooling device (10) has a venting interface (90) for venting the venting space (54) .

2. Cooling device (10) according to Claim 1,
**characterized in that**
the cooling channel top (42) has two planes (E1, E2), wherein the second plane (E2) is arranged above the first plane (E1), wherein the base surface (50) is arranged in the first plane (E1), and wherein the venting space (54) extends between the first plane (E1) and the second plane (E2), in particular wherein the first plane (E1) and the second plane (E2) are formed parallel to one another.

3. Cooling device (10) according to one of the preceding claims,
**characterized in that**
the venting space (54), in particular an upper side of the venting space (54), rises along a flow path (S) of the cooling liquid (K) at least in portions, in particular up to the venting interface (90).

4. Cooling device (10) according to one of the preceding claims,
**characterized in that**
the venting space (54) has an initial portion (54A) and an end portion (54E) along the flow path (S) of the cooling liquid (K), wherein the venting interface (90) is arranged in the end portion (54E) of the venting space (54) .

5. Cooling device (10) according to one of the preceding claims,
**characterized in that**
the venting interface (90) has a smaller diameter (D1) for venting than a diameter (D2) of the inlet port (20) for the cooling liquid (K) and/or a diameter (D3) of the outlet port (30) for the cooling liquid (K), and/or
**in that** the inlet port (20) and/or the outlet port (30) are arranged below the base surface (50).

6. Cooling device (10) according to one of the preceding claims,
**characterized in that**
the flow channel (40) comprises a plurality of flow disturbance devices (56), in particular wherein the flow disturbance devices (56) are connected to the cooling channel top (42) and extend towards the cooling channel base (46).

7. Cooling device (10) according to one of the preceding claims,
**characterized in that**
the venting space (54) is arranged in a U-shape around the base surface (50), at least in portions.

8. Cooling device (10) according to one of the preceding claims,
**characterized in that**
the cooling device (10) has a main body (12), in particular a housing, wherein the cooling channel (40) is designed in an integrally bonded manner in the main body (12), and/or wherein the main body (12) is designed to receive the power electronics (120) and/or the battery cell stack (100).

9. Battery system (200) comprising a battery cell stack (100) having a plurality of battery cells (110), power electronics (120), and a cooling device (10), wherein the power electronics (120) are connected in a heat-transferring manner to the cooling channel top (42) on the side of the cooling channel top (42) facing away from the cooling channel (40),
**characterized in that**
the cooling device (10) is designed according to one of the preceding claims.

10. Battery system (200) according to Claim 9,
**characterized in that**
the power electronics (120) comprise a logic device (122) and a power device (124), in particular wherein the logic device (122) is arranged on the side of the base surface (50) of the cooling channel top (42) facing away from the cooling channel (40), and wherein the power device (124) is arranged on the side of the venting space (54) of the cooling channel top (42) facing away from the cooling channel (40).

## Revendications

1. Dispositif de refroidissement (10) destiné au refroidissement d'une électronique de puissance (120) d'un système de batterie (200) comprenant une pluralité d'éléments de batterie (110), le dispositif de refroidissement (10) présentant un canal de refroidissement (40) pourvu d'une partie inférieure de canal de refroidissement (46), d'une partie supérieure de canal de refroidissement (42) et d'au moins une paroi de canal de refroidissement (44), dans lequel l'électronique de puissance (120) peut être reliée en transfert thermique à la partie supérieure de canal de refroidissement (42) sur un côté, détourné du canal de refroidissement (40), de la partie supérieure de canal de refroidissement (42), dans lequel le dispositif de refroidissement (10) présente un raccord d'entrée (20) pour faire entrer un liquide de refroidissement (K) dans le canal de refroidissement (40), un raccord de sortie (30) pour faire sortir le liquide de refroidissement (K) du canal de refroidissement (40),
**caractérisé en ce que** la partie supérieure de canal de refroidissement (42) présente sur le côté tourné vers le canal de refroidissement (40) une surface de base (50) et au moins un bossage (52), dans lequel le bossage (52) réalise un espace d'aération (54), et dans lequel le dispositif de refroidissement (10) présente une interface d'aération (90) pour aérer l'espace d'aération (54).

2. Dispositif de refroidissement (10) selon la revendication 1, **caractérisé en ce que** la partie supérieure de canal de refroidissement (42) présente deux plans (E1, E2), dans lequel le deuxième plan (E2) est disposé au-dessus du premier plan (E1), dans lequel la surface de base (50) est disposée dans le premier plan (E1), et dans lequel l'espace d'aération (54) s'étend entre le premier plan (E1) et le deuxième plan (E2), en particulier dans lequel le premier plan (E1) et le deuxième plan (E2) sont configurés l'un en parallèle à l'autre.

3. Dispositif de refroidissement (10) selon l'une quelconque des revendications précédentes, **caractérisé en ce que** l'espace d'aération (54), en particulier une face supérieure de l'espace d'aération (54), remonte le long d'un trajet d'écoulement (S) du liquide de refroidissement (K) au moins par endroits, en particulier jusqu'à l'interface d'aération (90).

4. Dispositif de refroidissement (10) selon l'une quelconque des revendications précédentes, **caractérisé en ce que** l'espace d'aération (54) présente le long du trajet d'écoulement (S) du liquide de refroidissement (K) une partie initiale (54A) et une partie finale (54E), dans lequel l'interface d'aération (90) est disposée dans la partie finale (54E) de l'espace d'aération (54).

5. Dispositif de refroidissement (10) selon l'une quelconque des revendications précédentes, **caractérisé en ce que** l'interface d'aération (90) présente pour l'aération un diamètre inférieur (D1) à un diamètre (D2) du raccord d'entrée (20) pour le liquide de refroidissement (K) et/ou à un diamètre (D3) du raccord de sortie (30) pour le liquide de refroidissement (K), et/ou **en ce que** le raccord d'entrée (20) et/ou le raccord de sortie (30) sont disposés au-dessous de la surface de base (50).

6. Dispositif de refroidissement (10) selon l'une quelconque des revendications précédentes, **caractérisé en ce que** le canal d'écoulement (40) comprend une pluralité de dispositifs de perturbation d'écoulement (56), en particulier dans lequel les dispositifs de perturbation d'écoulement (56) sont reliés à la partie supérieure de canal de refroidissement (42) et s'étendent en direction de la partie inférieure de canal de refroidissement (46).

7. Dispositif de refroidissement (10) selon l'une quelconque des revendications précédentes, **caractérisé en ce que** l'espace d'aération (54) est disposé autour de la surface de base (50) au moins par endroits en forme de U.

8. Dispositif de refroidissement (10) selon l'une quelconque des revendications précédentes, **caractérisé en ce que** le dispositif de refroidissement (10) présente un corps de base (12), en particulier un boîtier, dans lequel le canal de refroidissement (40) est configuré en liaison de matière avec le corps de base (12), et/ou dans lequel le corps de base (12) est configuré pour recevoir l'électronique de puissance (120) et/ou la pile d'éléments de batterie (100).

9. Système de batterie (200), comprenant une pile d'éléments de batterie (100), comprenant une pluralité d'éléments de batterie (110), une électronique de puissance (120) ainsi qu'un dispositif de refroidissement (10), dans lequel l'électronique de puissance (120) est reliée en transfert thermique à la partie supérieure de canal de refroidissement (42) sur un côté, détourné du canal de refroidissement (40), de la partie supérieure de canal de refroidissement (42), **caractérisé en ce que** le dispositif de refroidissement (10) est configuré selon l'une quelconque des revendications précédentes.

10. Système de batterie (200) selon la revendication 9, **caractérisé en ce que** l'électronique de puissance (120) comprend un dispositif logique (122) et un dispositif de puissance (124), en particulier dans lequel le dispositif logique (122) est disposé sur le côté de la surface de base (50), détourné du canal de refroidissement (40), de la partie supérieure de canal de refroidissement (42), et dans lequel le dispositif de puissance (124) est disposé sur le côté de l'espace d'aération (54), détourné du canal de refroidissement (40), de la partie supérieure de canal de refroidissement (42).
